# EUROPEAN PATENT SPECIFICATION

(11) **EP 0 653 576 B1**
(45) Date of publication and mention of the grant of the patent: **22.07.1998**
(21) Application number: 94202965.3
(22) Date of filing: 13.10.1994
(51) Int. Cl.: F16F 9/32

(54) **A method of forming a hydraulic damper**
Verfahren zum Formen eines hydraulischen Dämpfers
Procédé pour former un amortisseur hydraulique

(30) Priority: 09.11.1993 GB 9323047
(43) Date of publication of application: 17.05.1995
(73) Proprietor: Delphi France Automotive Systems, 92257 La Garenne-Colombes (FR); DELPHI AUTOMOTIVE SYSTEMS ESPANA SA, Cadiz (ES)
(72) Inventor: Fulks, Gary Chris, West Carrolton, Ohio 45449 (US); Barbosa, Manuel Tornell, Cadiz (ES); Jones, Nicholas, F-60260 La Morlaye (FR); Garcia, Miguel Candela, Chiclana, Cadiz (ES); Jimenez, Francisco Javier Sanchez, El Puerto De Santa Maria, Cadiz (ES); Gorostidi, Jose Ignacio Membrillera, Cadiz (ES); Arjona, Antonio Perez De La Lastra, El Puerto De Santa Maria, Cadiz (ES)
(74) Representative: Denton, Michael John

(56) References cited:
- EP-A- 0 149 384
- DE-A- 2 516 656
- DE-A- 3 939 012
- DE-A- 4 102 002
- DE-U- 9 109 019
- FR-A- 2 376 971
- PATENT ABSTRACTS OF JAPAN vol. 16, no. 452 (M-1313) 21 September 1992 & JP-A-04 158 946 (ATSUGI UNISIA) 2 June 1992

## Description

This invention relates to a method of forming a hydraulic damper for a motor vehicle. By hydraulic damper is meant a suspension strut or shock absorber.

A hydraulic damper for use in the suspension system of a motor vehicle typically comprises a tube; a piston sealably slidably mounted in the tube and attached to a piston rod, the piston separating a compression chamber from a rebound chamber within the tube; a compression stroke valve mounted on the piston which allows fluid flow from the compression chamber to the rebound chamber; and a rebound stroke valve mounted on the piston which allows fluid flow from the rebound chamber to the compression chamber. The piston rod extends out of the tube at one end thereof, and is sealably slidably mounted in that one end. Such hydraulic dampers either comprise an inner tube and an outer tube (sometimes referred to as a twin tube damper) in which the piston sealably slides in the inner tube, or comprise a single tube (sometimes referred to as a monotube damper).

It is usual practice to form the or each tube of a hydraulic damper by rolling a sheet of steel and welding together the adjacent longitudinal edges. External parts, such as the spring seat and the mounting bracket or steering knuckle, which are also formed from steel, are then welded to the single tube or the outer tube. The other end of the tube is sealed closed by welding on an end plate or by arc-heating and rolling the tube end, and the internal components of the suspension strut (such as those mentioned above) are inserted into the tube by way of the one end thereof, which is then sealed closed. The use of several welding steps has disadvantages in that welds are time consuming operations. Further, welds are susceptible to corrosion. Still further, the use of steel has disadvantages with regard to weight.

DE-A-4102002 discloses a method in accordance with the preamble of claim 1.

It is an object of the present invention to overcome one or more of the above mentioned disadvantages.

To this end, a method of forming a hydraulic damper in accordance with the present invention comprises extruding a tube of aluminium or aluminium alloy; and closing an end of the extruded tube by flame heating the end of the extruded tube and rolling the flame heated end.

This invention removes the steps of welding, thereby removing time consuming operations. Further the use of aluminium or aluminium alloy has advantages with regard to weight when compared to previously known arrangements.

The present invention will now be described, by way of example, with reference to the accompanying drawings, in which:-
Figure 1 is a cross-sectional view of a hydraulic damper in accordance with the present invention;
Figure 2 is a side view of an extruded outer tube with integral arms for use with an alternative arrangement of the hydraulic damper of Figure 1;
Figure 3 is a side view of the extruded outer tube of Figure 2 with the arms cut to form a mounting bracket;
Figure 4 is a perspective view of the extruded outer tube of Figure 3 with a spring seat mounted thereon;
Figure 5 is a cross-sectional view of an extruded outer tube for use with a further alternative arrangement of the hydraulic damper of Figure 1;
Figure 6 is a cross-sectional view of extruded inner and outer tubes for use with a still further alternative arrangement of the hydraulic damper of Figure 1;
Figure 7 is a side view of an extruded outer tube for use with another alternative arrangement of the hydraulic damper of Figure 1;
Figure 8 is a cross-sectional view of an extruded outer tube for use with a further alternative arrangement of the hydraulic damper of Figure 1; and
Figure 9 is a cross-sectional view of extruded tubes for use with a still further alternative arrangement of the hydraulic damper of Figure 1.

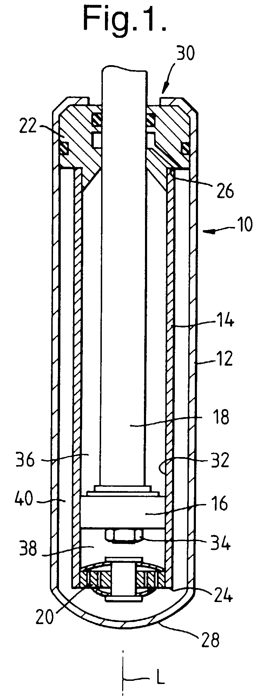

Referring to the drawings, the hydraulic damper 10 shown in Figure 1 is of the twin tube damper type, and comprises an outer tube 12, and an inner tube 14 substantially coaxial with the outer tube on an axis L. The outer tube 12, and preferably the inner tube 14, are formed from extruded aluminium or aluminium alloy and have a substantially constant cross-section along their length. The hydraulic damper 10 further comprises conventional components such as a piston assembly 16, a piston rod 18 having a longitudinal axis on axis L, a compensation valve 20, and a rod guide 22. The piston assembly 16 includes a compression valve and a rebound valve (not shown). The piston assembly 16, the compensation valve 20 and the rod guide 22 may be any suitable conventional design well known to those skilled in the art, and will not be described in detail. The inner tube 14 is substantially closed at one end 24 by the compensation valve 20, and is substantially closed at the other end 26 by the rod guide 22. The outer tube 12 is closed at one end 28 by flame heating and rolling the outer tube walls, and is substantially closed at the other end 30 (the open end) by the rod guide 22 and by spin closing the end 30 of the outer tube. An example of apparatus suitable for spin closing is disclosed in our GB patent application no. 9412806.3 (2290736A), published after the priority date of the present application, in which a pair of rollers initially push a portion of the outer tube at the open end over at approximately 45°, and a second pair of rollers then push a section of the portion over at approximately 90°, whilst the outer tube is spinning about its longitudinal axis. The piston rod 18 extends through, and makes a sealing sliding fit with the rod guide 22. The piston assembly 16 makes a sealing sliding fit with the inner surface 32 of the inner tube 14. The piston rod 18 is secured to the piston assembly 16 by a nut 34 or any other suitable means. The piston assembly 16 divides the inner area of the inner tube 14 into a rebound chamber 36 and a compression chamber 38. The area between the inner tube 14 and the outer tube 12 defines a compensation chamber 40. The rebound and compression chambers 36 and 38 are substantially filled with fluid to damp reciprocating movement of the piston assembly 16 and piston rod 18 along axis L relative to the outer and inner tubes 12 and 14. The compensation chamber 40 is partly filled with fluid and acts as a reservoir for the fluid in the rebound and compression chambers 36 and 38. The hydraulic damper 10 is mounted in a motor vehicle (not shown) in any standard manner.

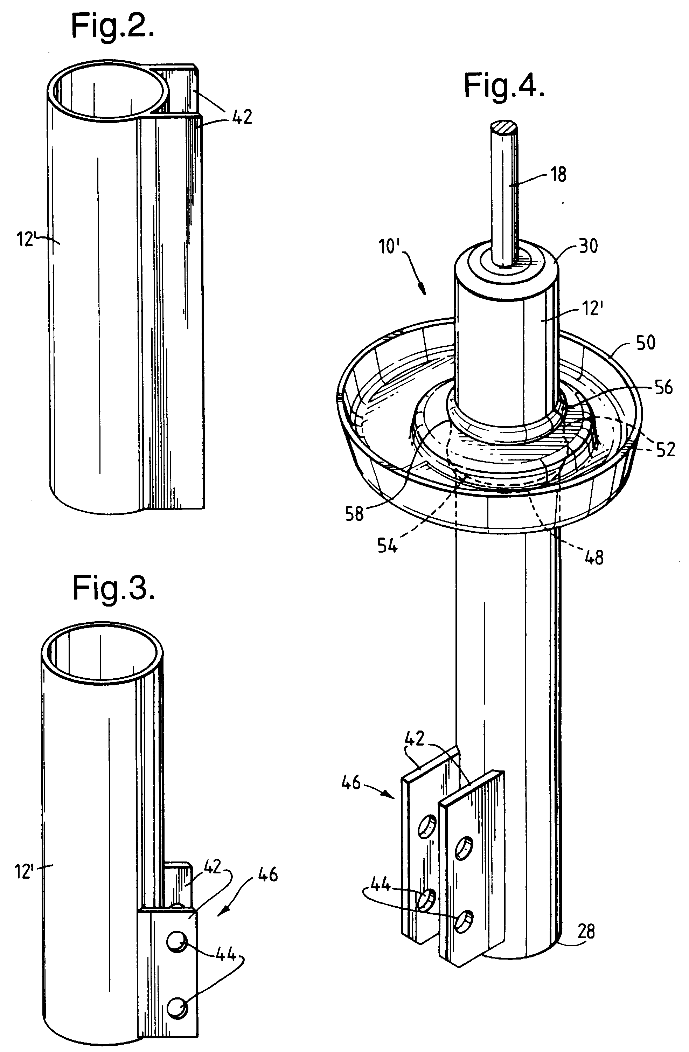

Figures 2 to 4 show an alternative arrangement for the outer tube 12' of the hydraulic damper of Figure 1. In this alternative arrangement, the outer tube 12' is extruded integrally with a pair of spaced arms 42 which are substantially parallel. The length of the arms 42 is then reduced by a cutting operation, and pairs of holes 44 are cut in each arm to form a mounting bracket 46. A first external, circumferentially extending, bead 48 is then formed in the tube 12'. A spring seat 50 of aluminium or aluminium alloy is formed by pressing and includes a cylindrical section 52 which has an internal shape and size which is substantially the same as the external shape and size of the tube 12' - that is, the cylindrical section can make a close sliding fit on the tube. The spring seat 50 is slid onto the tube 12', with the tube passing through the cylindrical section 52 until one end 54 of the cylindrical section rests on the first bead 48. A second external, circumferentially extending, bead 56 is then formed in the tube 12' adjacent the other end 58 of the cylindrical section 52 to secure the spring seat 50 on the tube. As an alternative to this arrangement, the spring seat 50 may be secured by sliding the spring seat into position and then forming the two ribs, or by forming two rings of external dimples rather than ribs, or by rivets, or any other suitable alternative arrangement. Either prior to, or after, attachment of the spring seat 50, the one end 28 of the outer tube 12' is closed by flame heating the end of the outer tube, and then rolling over the end. Having formed the outer tube 12' with the mounting bracket 46 and the spring seat 50, and having closed the one end 28, the other components of the hydraulic damper 10' can then be assembled therein.

The other end 30 of the extruded tube 12,12' may be closed by a threaded cap as an alternative arrangement to spin closing.

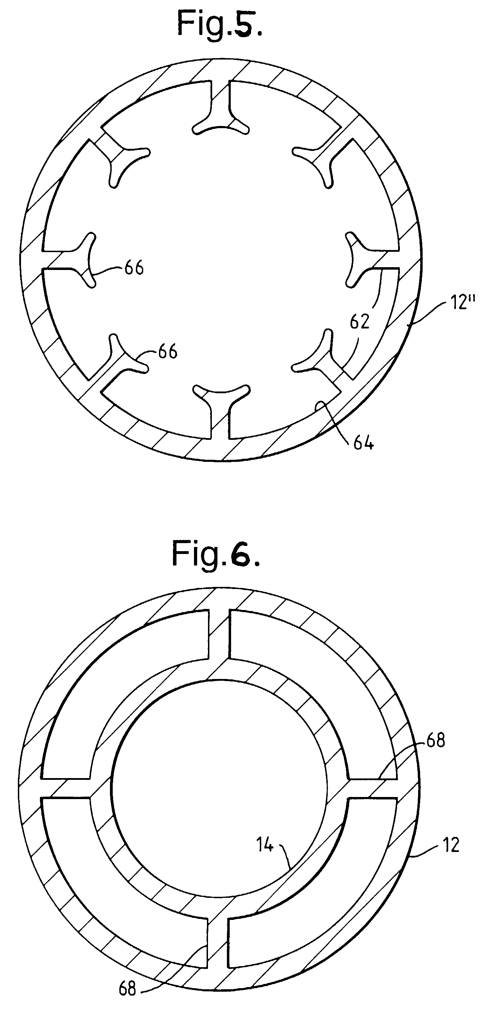

Figure 5 shows a further alternative arrangement for the extruded outer tube 12" for the hydraulic damper 10 of Figure 1. In this alternative, the outer tube 12" is integrally extruded with a number of inwardly directed webs 62 which extend longitudinally along the inner surface 64 of the extruded tube. The webs 62 have a cross-section which is between and T and Y shaped, and their inwardly directed surfaces 66 forms tips 67 which lie substantially on a circle having a diameter slightly less than the external diameter of the inner tube 14 of the hydraulic damper 10. The inner tube 14 (which may be of aluminium or aluminium alloy or of any other suitable material) of the hydraulic damper 10 is slid between and resiliently gripped by the webs 62 to retain the inner tube in position relative to the outer tube 12". In a still further alternative arrangement, as shown in Figure 6, the inner tube 14 and the outer tube 12 are integrally extruded in one piece with a number of interconnecting webs 68 which extend longitudinally. The arrangements of Figures 5 and 6 have the additional advantage of reducing the risk of the inner tube 14 bending relative to the outer tube 12 when the hydraulic damper 10 is subjected to a bending moment between the outer tube and the piston rod 18. The support arrangements for the inner tube of the embodiments of Figures 5 and 6 provide increased strength for the hydraulic damper over previous designs and allow a reduction in wall thickness for the inner tube, thereby further reducing weight and cost.

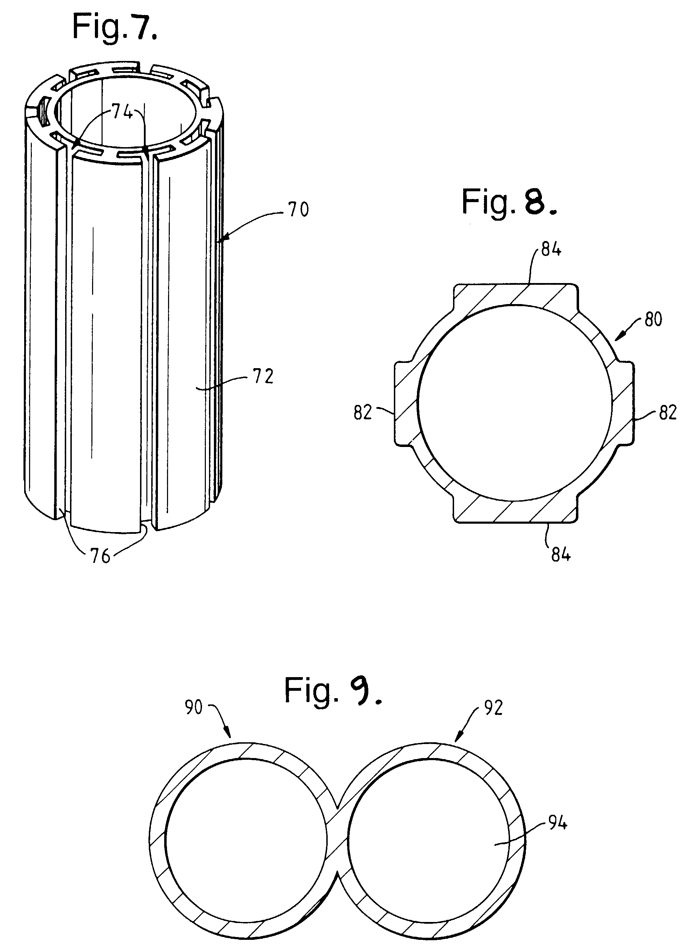

Figure 7 shows a further modification of an extruded tube 70 in which the external surface 72 of the tube has a number of substantially identical T-shaped channels 74 extending along the length of the tube. With this arrangement, cylindrical mounting sections of a spring seat and a separately formed mounting bracket or steering knuckle may be formed with correspondingly shaped ribs which allow the spring seat and the mounting bracket or steering knuckle to make a close sliding fit with the tube 70. When the spring seat and the mounting bracket or steering knuckle are in position, the free edges 76 of the channels 74 in the tube 70 can be distorted to secure the spring seat and mounting bracket in position. This arrangement increases the area of the external surface 72 of the extruded tube 70, thereby providing increased heat dissipation relative to an extruded tube having a smooth external surface.

In the arrangement of Figure 8, the extruded tube 80 has two pairs of external, longitudinally (axially) extending, outwardly directed, ribs 82,84, with the ribs of each pair being diametrically opposed, and the pairs being set at right angles to one another. The ribs 82,84 of each pair have substantially the same cross-sectional shape and area, but different from the cross-sectional shape and area of the other pair of ribs. With this arrangement, cylindrical mounting sections of a spring seat and a separately formed mounting bracket or steering knuckle may be formed with correspondingly shaped grooves which allow the spring seat and the mounting bracket or steering knuckle to make a close sliding fit with the tube 80, and also provide means for correctly locating the spring seat and mounting bracket or steering knuckle.

In the arrangement of Figure 9, a pair of tubes 90,92 are integrally extruded and extend longitudinally substantially parallel to one another. With this arrangement, one of the tubes 90 acts as the inner tube of a twin tube hydraulic damper, and the other tube 92 provides the equivalent of a compensation chamber 94 for the hydraulic damper.

Whilst the embodiments described above in relation to Figures 1 to 4, 7 and 10 refer to the twin tube type of hydraulic damper, it will be appreciated that these arrangements are also applicable to hydraulic dampers of the monotube type in which the sole tube of the damper is formed from extruded aluminium or aluminium alloy.

Preferably the extruded tube is formed from aluminium alloy conforming to BS 6082 and which comprises, by weight percentage, 0.70 to 1.3% Si, 0.5% Fe, 0.1% Cu, 0.4 to 1.0% Mn, 0.6 to 1.2% Mg, 0.25% Cr, 0.2% Zn, 0.1% Ti, 0.05 to 0.15% impurities, with the remainder being aluminium. Other compositions of aluminium alloy may be used.

All of the above described arrangements have advantages in terms of easier manufacture and assembly, and of providing a hydraulic damper of reduced weight compared to previously known arrangements.

## Claims

1. A method of forming a hydraulic damper (10) comprising extruding a tube (12) of aluminium or aluminium alloy; and closing an end (28) of the extruded tube; characterised in that the end is closed by flame heating the end of the extruded tube and rolling the flame heated end.

2. A method as claimed in Claim 1, in which the damper (10) has an inner tube (14) coaxial with an outer tube (12), wherein the outer tube is the extruded tube.

3. A method as claimed in Claim 2, wherein the inner tube (14) is also extruded from aluminium or aluminium alloy.

4. A method as claimed in Claim 2 or Claim 3, wherein the outer tube (12") is extruded with a number of inwardly directed webs (62) integrally formed with the outer tube on extrusion thereof, the webs providing support for the inner tube.

5. A method as claimed in Claim 2 or Claim 3, wherein the inner (14) and outer (12) tube are integrally extruded in one piece along with a number of interconnecting webs (68).

6. A method as claimed in any one of Claims 1 to 5, wherein the extruded tube (70) is extruded with substantially identical T-shaped channels (74) formed in its external surface (72), the channels extending along the length of the tube.

7. A method as claimed in any one of Claims 1 to 6, wherein a mounting bracket (46) is integrally formed with the extruded tube on extrusion thereof.

8. A method as claimed in Claim 7, wherein two substantially parallel arms (42) are extruded with the extruded tube (12') and the arms are then cut to form the mounting bracket.

9. A method as claimed in any one of Claims 1 to 8, wherein, after insertion of required components inside the extruded tube, the other end (30) of the tube (12,12') is spun closed to retain the components within the extruded tube.

## Patentansprüche

1. Ein Verfahren zum Formen eines hydraulischen Dämpfers (10), welches die Schritte umfaßt, daß eine Röhre (12) aus Aluminium oder Aluminiumlegierung extrudiert und ein Ende (28) der extrudierten Röhre geschlossen wird,
dadurch **gekennzeichnet,**
daß das Ende durch Flammenerhitzen des Endes der extrudierten Röhre und Walzen des flammenerhitzten Endes geschlossen wird.

2. Ein Verfahren wie in Anspruch 1 beansprucht,
bei dem der Dämpfer (10) eine innere Röhre (14) koaxial zu einer äußeren Röhre (12) aufweist, wobei die äußere Röhre die extrudierte Röhre ist.

3. Ein Verfahren wie in Anspruch 2 beansprucht,
bei dem die innere Röhre (14) ebenfalls aus Aluminium oder Aluminiumlegierung extrudiert wird.

4. Ein Verfahren wie in Anspruch 2 oder Anspruch 3 beansprucht,
bei dem die äußere Röhre (12") mit einer Anzahl von nach innen gerichteten Stegen (62) extrudiert wird, die integral mit der äußeren Röhre bei deren Extrusion geformt werden, wobei die Stege eine Stütze für die innere Röhre schaffen.

5. Ein Verfahren wie in Anspruch 2 oder Anspruch 3 beansprucht,
bei dem die innere (14) und äußere (12) Röhre integral in einem Stück zusammen mit einer Anzahl von Verbindungsstegen 68 extrudiert werden.

6. Ein Verfahren wie in einem der Ansprüche 1 bis 5 beansprucht,
bei dem die extrudierte Röhre (70) mit im wesentlichen identischen T-förmigen Kanälen (74) extrudiert wird, die in ihrer äußeren Oberfläche (72) ausgebildet sind, wobei sich die Kanäle entlang der Länge der Röhre erstrecken.

7. Ein Verfahren wie in einem der Ansprüche 1 bis 6 beansprucht,
bei dem ein Montageträger (46) integral mit der extrudierten Röhre bei deren Extrusion gebildet wird.

8. Ein Verfahren wie in Anspruch 7 beansprucht,
bei dem zwei im wesentlichen parallele Arme (42) mit der extrudierten Röhre (12') extrudiert und die Arme dann geschnitten werden, um den Montageträger zu bilden.

9. Ein Verfahren wie in einem der Ansprüche 1 bis 8 beansprucht,
bei dem, nach Einsetzen erforderlicher Komponenten innerhalb der extrudierten Röhre, das andere Ende (30) der Röhre (12, 12') drehverschlossen wird, um die Komponenten innerhalb der extrudierten Röhre zu halten.

## Revendications

1. Procédé de réalisation d'un amortisseur hydraulique (10), comprenant l'action d'extruder un tube (12) en aluminium ou un alliage d'aluminium; et de fermer une extrémité (28) du tube extrudé;
caractérisé en ce que l'extrémité est fermée par un chauffage à la flamme de cette extrémité et par roulage de l'extrémité chauffée à la flamme.

2. Procédé selon la revendication 1, dans lequel l'amortisseur (10) comporte un tube intérieur (14) coaxial à un tube extérieur (12), où le tube extérieur est le tube extrudé.

3. Procédé selon la revendication 2, dans lequel le tube intérieur (14) est également extrudé en aluminium ou en un alliage d'aluminium.

4. Procédé selon la revendication 2 ou la revendication 3, où le tube extérieur (12") est extrudé avec un nombre de nervures (62) s'étendant vers l'intérieur, formées d'un seul tenant avec le tube extérieur lors de l'extrusion de celui-ci, les nervures fournissant un support pour le tube intérieur.

5. Procédé selon la revendication 2 ou la revendication 3, dans lequel les tubes intérieur (14) et extérieur (12) sont extrudés d'un seul tenant en une seule pièce avec un nombre de nervures de liaison (68).

6. Procédé selon l'une quelconque des revendications 1 à 5, dans lequel le tube extrudé (70) est extrudé avec des gorges (74) en forme de T essentiellement identiques aménagées à la surface extérieure (72) de celui-ci, les gorges s'étendant sur toute la longueur du tube.

7. Procédé selon l'une quelconque des revendications 1 à 6, dans lequel une bride de montage (46) est formée d'un seul tenant avec le tube extrudé, lors de l'extrusion de celui-ci.

8. Procédé selon la revendication 7, dans lequel deux bras essentiellement parallèles (42) sont extrudés avec le tube (12'), et dans lequel les bras sont ensuite découpés de manière à former la bride de montage.

9. Procédé selon l'une quelconque des revendications 1 à 8, dans lequel, après insertion des composants nécessaires à l'intérieur du tube extrudé, l'autre extrémité (30) du tube (12, 12') est fermée par par repoussage-tournage de manière à retenir les composants à l'intérieur du tube extrudé.
